**Europäisches Patentamt**

**European Patent Office**

**Office européen des brevets**

(19)

(11) Publication number : **0 380 490 B1**

# (12) EUROPEAN PATENT SPECIFICATION

(45) Date of publication of patent specification :
**16.09.92 Bulletin 92/38**

(51) Int. Cl.[5] : **H01M 6/18**

(21) Application number : **88905978.8**

(22) Date of filing : **14.07.88**

(86) International application number :
**PCT/GB88/00565**

(87) International publication number :
**WO 89/00771 26.01.89 Gazette 89/03**

(54) ION CONDUCTORS.

(30) Priority : **14.07.87 GB 8716559**

(43) Date of publication of application :
**08.08.90 Bulletin 90/32**

(45) Publication of the grant of the patent :
**16.09.92 Bulletin 92/38**

(84) Designated Contracting States :
**AT BE CH DE FR GB IT LI LU NL SE**

(56) References cited :
**EP-A- 0 078 505**
**FR-A- 2 568 574**
**GB-A- 2 164 047**

(73) Proprietor : **THE SECRETARY OF STATE FOR DEFENCE IN HER BRITANNIC MAJESTY'S GOVERNMENT OF THE UNITED KINGDOM OF GREAT BRITAIN AND NORTHERN IRELAND; Whitehall London SW1A 2HB (GB)**

(72) Inventor : **GILES, Jeremy, Roger, Martin 19 Browning Road Worthing West Sussex (GB)**

(74) Representative : **Beckham, Robert William et al Procurement Executive Ministry of Defence Room 2016 Empress State Building Lillie Road London SW6 1TR (GB)**

Jouve, 18, rue Saint-Denis, 75001 PARIS

EP 0 380 490 B1

## Description

This invention relates to polymeric electrolytes, methods of making these, and to their use in electrolytic cells and batteries of such cells.

Solid polymeric electrolytes have been investigated in recent years as alternatives to liquid electrolytes in batteries since their use allows greater flexibility in battery design and manufacture. The most widely studied material for this application has been high molar mass poly(ethylene oxide) ("PEO") combined with a dissolved salt to enhance conductivity.

The polymer PEO is able to form stable solvates with a number of salts. However, the electrical and morphological properties of such electrolytes require improvement before they are suitable for use in cells which operate effectively at or about room temperature. In particular, high molar mass PEO tends to crystallise at about 65°C, considerably reducing the content of the amorphous component needed for high ion conductivity.

Recent advances, for example as described in UK patent application GB 2 164 047 A, have attempted to overcome this disadvantage of PEO whilst retaining an essentially oxyethylene-based polymer, by modification of the PEO structure such that crystallinity at ambient temperatures is essentially removed. In GB 2 164 047 A, linking groups such as $(CH_3)SiO$ and $CH_2O$ ("oxymethylene") are introduced between short sequences of oxyethylene groups, thereby disrupting the PEO backbone so that crystallisation is inhibited.

The polymeric electrolytes described in GB 2 164 047 A typically have conductivities at 25°C of $10^{-4}$ to $10^{-5}$ S cm$^{-1}$ ($\Omega^{-1}$ cm$^{-1}$), a considerable improvement over PEO itself. These conductivities are appropriate for certain battery applications, particularly where the electrolyte is in the form of a thin film, eg 50 μm thick, thereby permitting the relatively low current densities over a higher active surface area and maintaining the required overall current needed for the device.

The present invention seeks to improve the current densities that may be carried by a polymer-based electrolyte at ambient temperatures by increasing the conductivity of the electrolyte and altering its temperature dependence, particularly at low temperatures (eg less than 0°C), this latter being an important object of this invention.

According to the present invention an ion-conducting polymeric material comprises:

a high molecular mass poly(ethylene oxide) structural material which is at least partially crystalline at ambient temperature, and

one or more low mass plasticisers selected from the group comprising acetonitrile, γ-butyrolactone, dioxolane, tetrahydrofuran, 2-methyltetrahydrofuran, dimethyl sulphoxide and alkylene carbonates;

characterised in that the ion-conducting polymer further comprises one or more ion-solvating polymers which are amorphous at ambient temperature, and in that the or each ion-solvating polymer is selected from the group comprising:

(i) graft copolymers having amorphous side chains which contain the unit $(CH_2CH_2O)_k$ where k has an average value between 3 and 20 and the main chain is selected from a carbon-carbon or siloxane or a phosphazene backbone, where there may be a linkage group between the side chain and the backbone which may be selected from known common groups including ester, alkane, oxyalkane and combinations thereof;

(ii) siloxane-linked poly(ethylene glycols) having a repeat unit $B((OCH_2CH_2)_a)_m$ where B is $-OSi-(CH_3)_2-$ and a has an average value of 4 to 9 and m is 1, or B is $(-O)_{3/2}Si(CH_3)-$ and a has an average value of 4 to 9 and m is 3/2, and

(iii) oxymethylene-linked poly(ethylene glycol) having a repeat sequence $((CH_2CH_2O)_aCH_2O)$ where a has an average value of 4 to 10.

The material may also contain as a fourth component one or more ionic salts.

The structural material primarily provides mechanical support for the polymeric material of the invention. The structural material itself may also be capable of ion-solvation, although its high molecular mass - preferably in the range $1 \times 10^6$ to $5 \times 10^6$ - means that this constituent is highly crystalline at ambient temperature, with the result that its contribution to the overall conductivity of the ion-conducting polymer is very limited.

The plasticiser(s) is/are also preferably ion-solvating and should be compatible with the polymers in the ion-conducting material, particularly with the ion-solvating amorphous polymer component(s). As plasticisers are dipolar aprotic solvents selected from acetonitrile, -butyrolactone, dioxolane, tetrahydrofuran, 2-methyltetrahydrofuran, dimethyl sulphoxide and in particular alkylene carbonates such as propylene carbonate and ethylene carbonate.

The ion-solvating amorphous polymers (i) to (iii) each contain $(CH_2CH_2O)$ units in their repeat sequences and the variable a has an average value of 4 to 10, preferably 4 to 9, especially of about 9.

The polymer materials (i) to (iii) and the plasticiser separately and/or together provide a highly conducting medium for ions present in the polymeric material, eg already present or as formed by ionisation of the optionally-added ionic salt.

When present, this optional salt enhances the conductivity of the polymeric material. The salt should be compatible with the desired electrode processes and electrode materials.

Lithium salts are for example preferred where lithium metal oxidation and lithium ion reduction forms the desired anode electrochemical reaction. The inclusion of more than one salt may further enhance the conductivity of the polymeric material, improve the electrode processes and improve the morphological behaviour of the polymeric material. Suitable cations in the salt are metal ions or stable cationic complex ions. preferred salts are those of alkali metals, especially Li and Na, the alkaline earths, especially calcium and magnesium, $nickel^{2+}$, $zinc^{2+}$, $mercury^{2+}$, ammonium and alkyl or aryl ammonium cations. The anion may be any known compatible anion, particularly those found in electrolytes such as $ClO_4^-$, $CF_3SO_3^-$, $PF_6^-$, $AsF_6^-$, $AlCl_4^-$, $BPh_4^-$, $BF_4^-$, $I^-$, $SCN^-$, $CF_3CO_2^-$, $CF_3(CF_2)_nSO_3^-$ and $CF_3(CF_2)_nCO_2^-$ where n is an integer, or other strong acid anions. Preferred salts are $LiCF_3SO_3$, $LiClO_4$, $LiPF_6$ and $LiAsF_6$.

It may in some cases be useful for the material to contain two or more salts, eg a lithium salt plus another salt.

The relative proportions of the structural material, the plasticiser, the ion-solvating amorphous polymer and, when present, the ionic salt constituent are variable within broad limits, but none of the components should constitute more than 75% by weight of the whole material. Typically but not exclusively the structural material may comprise 1O - 35 mole %, the plasticiser 1O - 5O mole % and the ion-solvating polymer 3O - 7O mole % of the mixture. When $Li^+$ is used as a cation a suitable range for the ion-solvating content of the electrolyte : Li ratio is 1O : 1 to 4O : 1, this range being typical but not exclusive.

The various constituents of the ion-conducting polymer material of the present invention may form a physical mixture. It is improbable and undesirable that the components should form a single homogeneous phase. The details of phase separation will depend on the choice of components and their relative quantities. It is preferred that a highly ion conducting phase is formed which is maintained over the working temperature range of operation. A structurally supporting phase or phases should also be generated. It may be desirable that there is covalent bonding between components so that the microscopic structure of the material is stabilised into a preferred morphology.

Fillers such as alumina or glass micro-spheres may also be mixed with polymeric materials of the invention to improve the properties for particular applications.

The use of plasticisers to enhance the ion conducting properties of a polymeric electrolyte such as high molar mass PEO is known, but such blends suffer from the problems of kinetic instability at ambient temperatures, leading to recrystallisation. Blends of PEO with poly (ethylene glycol) (PEG) of molar mass 4OO and derivatives thereof have been described eg Kelly *et al.*, J Electroanal Chem (1984), 168, 467, but do not adequately overcome such disadvantages.

By the use of the three or four components in this invention, the problems of kinetic instability and recrystallisation may be reduced. In particular, the combination of the ion-solvating amorphous polymer and the plasticiser is expected to maintain an amorphous conducting phase. The range of bulk ionic conductivities achieved and their temperature dependence are significantly improved, so that the polymeric materials of the invention become readily compatible with battery thin-film electrolytic requirements.

Polymeric materials of the invention may be made simply by mixing the structural material, the plasticiser, the ion-solvating amorphous polymer and, when desired, the ionic salt constituent in a suitable solvent, eg acetone under an inert atmosphere. The solvent may then be removed eg by evaporation. By casting the solution into a suitable mould, or onto a surface to form a film, and allowing evaporation, the polymeric material may be formed in any suitable shape. Any alternative route to electrolyte fabrication may be employed, common to those skilled in the art of polymer materials forming and manufacture. Covalent bonding, eg cross-linking between the components may be achieved by conventional methods, eg the stimulus of radiation or heat, with or without the presence of an activator, initiator or other added reagent.

According to the present invention in a second aspect there is provided an electrolytic cell comprising an anode, a cathode and an electrolyte between the two characterised in that the electrolyte comprises an ion-conducting polymer material according to the first aspect of the invention.

According to the present invention in a third aspect there is provided a battery comprising a plurality of cells according to the second aspect connected in series or in parallel. Electrolytic cells and batteries embodying the second and third aspects may be manufactured in known ways. They may be either primary or secondary (rechargeable) cells or batteries for a variety of uses, eg electric vehicles, computer memory back-up power sources, heart pace-makers and integrated power sources for printed circuit boards.

Batteries may be produced with the cells connected in series or in parallel (or a combination of the two) depending on whether maximum voltage or maximum current is required as an output.

As the thickness of the cells which may be produced from polymer electrolytes can be extremely small compared with the contact surface area of the cell components, it is possible to incorporate many cells, eg up to 1000 or more, in a compact battery structure.

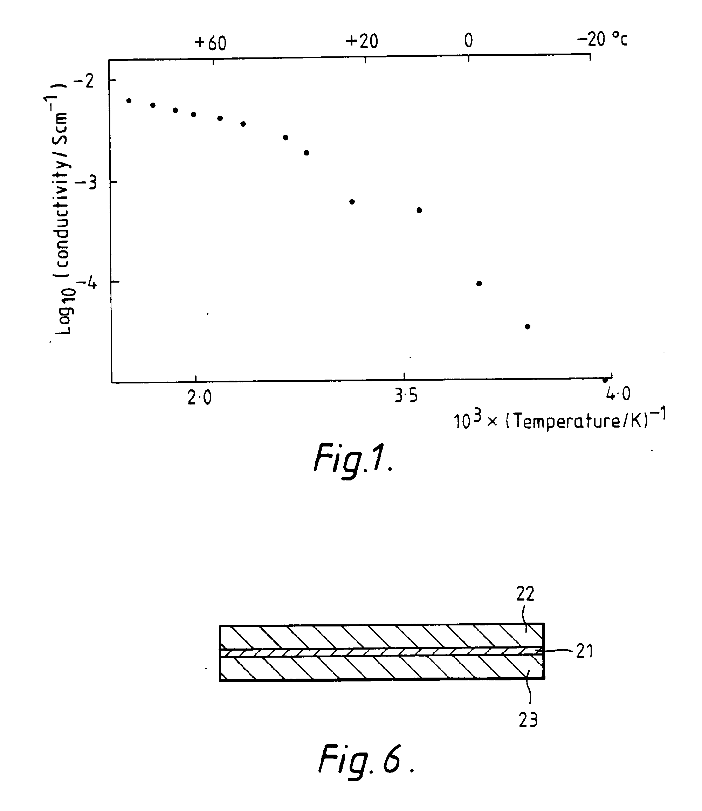

The invention will now be described by way of example only with reference to Figures 1 - 5 showing graphs of $\text{Log}_{10}$ (conductivity) vs. 1000 X 1/temperature (K) for polymeric materials of the invention and Figure 6 showing a cross section of an electrolytic cell embodying the invention.

Example 1

A polymeric material was prepared having the following four components:

(a) PEO of molar mass 4 X $10^6$;

(b) propylene carbonate;

(c) an oxymethylene-linked poly(ethylene glycol) polymer of weight average molar mass 3 X $10^5$ and repeat unit $[(CH_2CH_2O)_aCH_2O]$ where a had an average value of 9, and

(d) lithium trifluoromethane sulphonate $LiCF_3SO_3$.

The component (c) was prepared by the method described in GB 2 164 047 A, ie by reaction of poly(ethylene glycol) of a molecular weight sufficient to give an appropriate value of a with dibromomethane or dichloromethane in the presence of potassium hydroxide.

The mole ratio of poly(ethylene glycol) to dibromomethane can be varied about 1 : 1 and the potassium hydroxide concentration altered in order to obtain the highest weight average molar mass of polymer. Using this method a polymer of molar mass about 3 X $10^5$ was obtained, having an average value of a of about 9.

All manipulations of the components and dried final products were performed under an inert atmosphere of nitrogen.

The four components above were introduced into a flask in the weight ratios (a) 16.4%, (b) 26.2%, (c) 43.4% and (d) 14.1%, and sufficient acetone was added to dissolve the components, forming a clear colourless solution. Slight warming may be necessary to achieve this. (Alternately the salt(s) may be dissolved with the PEO in acetone and the plasticiser(s) and component (c) separately dissolved in acetone, and the solutions combined to form a homogeneous electrolyte solution). A layer of this solution was cast onto the lower of a pair of steel electrodes forming part of a variable temperature conductivity cell. The residual acetone was removed under reduced pressure to leave a uniform film of the polymeric material, which was subsequently pressed to a film of thickness of about 200 μm between the electrodes.

At -20°C, a conductivity of approximately 1 X $10^{-5}$ S cm$^{-1}$ was recorded for the film.

The temperature dependency of the film conductivity is recorded in Figure 1.

Examples 2 and 3

Following the pattern of Example 1, a pair of electrolyte formulations were prepared using the components:

(a) PEO of molar mass 4 X $10^6$;

(b) propylene carbonate ("PC")

(c) oxymethylene-linked poly(ethylene glycol) (400) of average molar mass 3 X $10^5$ and repeat unit $[(CH_2CH_2O)_aCH_2O]_n$ where a has an average value of 9, and

(d) $LiCF_3SO_3$,

using acetone as the casting solvent. The following molar ratios were used:

Example 2:

(a) 2 X PEO

(b) 1 X propylene carbonate

(c) 4 X $[(CH_2CH_2O)_aCH_2O]_n$

(d) $LiCF_3SO_3$

to give a blend formula:

$$\{2PEO + PC + 4[(CH_2CH_2O)_aCH_2O]_n\}_{20}\ LiCF_3SO_3$$

Example 3:

(a) 1 X PEO

(b) 1 X propylene carbonate

(c) 2 X $[(CH_2CH_2O)_aCH_2O]_n$

(d) $LiCF_3SO_3$

EP 0 380 490 B1

to give a blend formula:

$$\{PEO + PC + 2[(CH_2CH_2O)_aCH_2O]_n\}_{20} \, LiCF_3SO_3$$

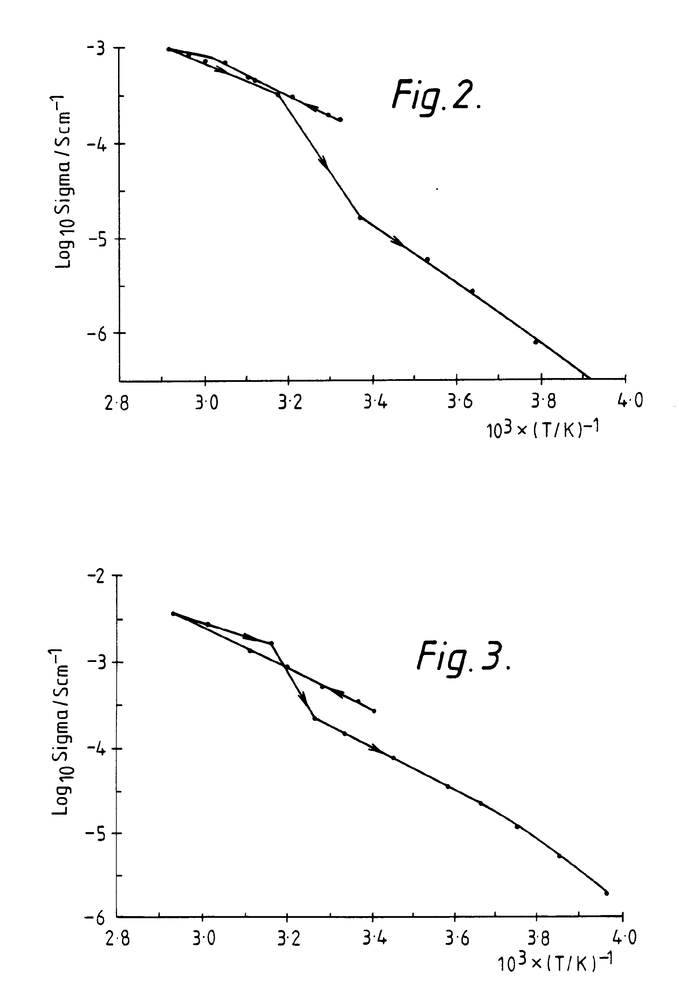

The results of $Log_{10}$ conductivity (sigma/S cm$^{-1}$) vs 1/temperature are shown in Figures 2 and 3 respectively.

In Figures 2 and 3 lines have been drawn through the points to indicate the direction of temperature change. For both examples a small conductivity step at 30 to 40°C is detectable, consistent with a phase change, PEO crystallisation/melting. This effect is favourably much reduced in comparison to usual (PEO + salt) electrolytes where a $10^2$ to $10^3$ S cm$_{-1}$ decline in conductivity is typical.

## Examples 4 and 5

Electrolytes were prepared in a similar manner to that of example 1 with acetone as the casting solvent, and components:

(a) PEO of molar mass $4 \times 10^6$;
(b) propylene carbonate and ethylene carbonate ("EC");
(c) $[(CH_2CH_2O)_aCH_2O]_n$, the variable a having an average value of 9, and
(d) $LiCF_3SO_3$.

The following molar ratios were used:

Example 4:

(a) $1 \times PEO$
(b) $1 \times (I : 1 \, PC : EC)$
(c) $2 \times [(CH_2CH_2O)aCH_2O]n$
(d) $LiCF_3SO_3$

to give an electrolyte : salt molar ratio of 20 : 1.

Example 5:

(a) $2 \times PEO$
(b) $1 \times (1 : 1 \, PC : EC)$
(c) $4 \times [(CH_2CH_2O)_aCH_2O]_n$
(d) $LiCF_3SO_3$

to give an electrolyte : salt molar ratio of 20 : 1.

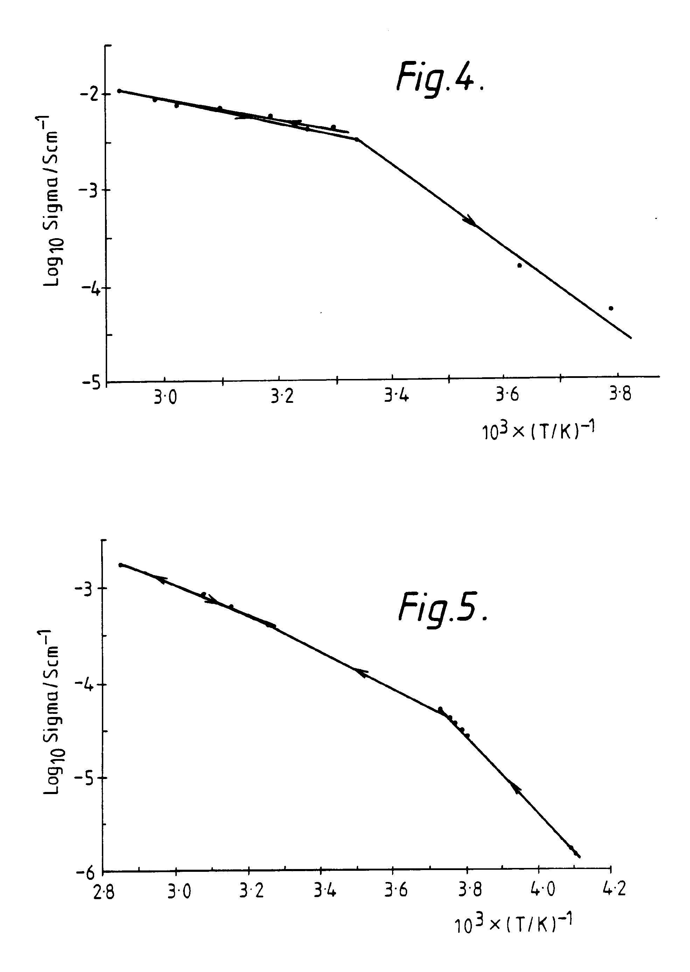

The results of $Log_{10}$ conductivity vs I/temperature are shown in Figures 4 and 5 respectively. For example 4, conductivity of $1 \times 10^{-3}$ S cm$^{-1}$ at 20°c was recorded.

Polymer electrolytes embodying the invention may be incorporated in an electrolytic cell as shown in Figure 6. A film 21 of the polymer electrolyte is sandwiched between an anode 22 preferably of lithium metal or a lithium alloy, eg an alloy with silicon or aluminium, and a cathode 23 comprising eg $TiS_2$ and carbon preferably with an added proportion of the electrolyte. The anode 22 and cathode 23 are conventional as is the encapsulation of the cell and/or its assembly within a battery (not shown in Figure 6). The cell may for example be made up using the techniques described in USP 4,303,748.

## Claims

1.  An ion-conducting polymer material comprising:

    a high molecular mass poly(ethylene oxide) structural material which is at least partially crystalline at ambient temperature, and

    one or more low mass plasticisers selected from the group comprising acetonitrile, y-butyrolactone, dioxolane, tetrahydrofuran, 2-methyltetrahydrofuran, dimethyl sulphoxide and alkylene carbonates;

    characterised in that the ion-conducting polymer further comprises one or more ion-solvating polymers which are amorphous at ambient temperature, and in that the or each ion-solvating polymer is selected from the group comprising:

    (i) graft copolymers having amorphous side chains which contain the unit $(CH_2CH_2O)_k$ where k has an average value between 3 and 20 and the main chain is selected from a carbon-carbon, a siloxane or a phosphazene backbone, where there may be a linkage group between the side chain and the

EP 0 380 490 B1

backbone which may be selected from known common groups including ester, alkane, oxyalkane and combinations thereof;

( ii ) siloxane-linked poly ( ethylene glycols ) having a repeat unit $B((OCH_2CH_2)_a)_m$ where B is $-OSi-(CH_3)_2-$ and a has an average value of 4 to 9 and m is 1, or B is $(-O)_{3/2}Si(CH_3)-$ and a has an average value of 4 to 9 and m is 3/2, and

(iii) oxymethylene-linked poly(ethylene glycol) having a repeat sequence $((CH_2CH_2O)_aCH_2O)$ where a has an average value of 4 to 10.

2. An ion-conducting polymeric material as claimed in claim 1 further characterised in that it additionally comprises one or more ionic salts.

3. An ion-conducting polymeric material as claimed in claim 2 further characterised in that the or each salt is a salt of a metal ion with a strong acid anion or a salt of a stable cationic complex ion with a strong acid anion.

4. An ion-conducting polymeric material as claimed in claim 3 further characterised in that it contains at least one lithium salt.

5. An ion-conducting polymeric material as claimed in claim 4 further characterised in that the lithium salt(s) is/are selected from $LiCF_3SO_3$, $LiPF_6$, $LiClO_4$ or $LiAsF_6$.

6. An ion-conducting polymeric material as claimed in any preceding claim further characterised in that the plasticiser(s) is/are ion-solvating.

7. An ion-conducting polymeric material as claimed in claim 6 further characterised in that the plasticiser(s) is/are propylene carbonate and/or ethylene carbonate.

8. An ion-conducting polymeric material as claimed in any preceding claim further characterised in that the poly(ethylene oxide) structural material has a molar mass in the range $1 \times 10^6$ to $5 \times 10^6$.

9. An ion-conducting polymeric material as claimed in claim 8 further characterised in that the ion-solvating polymer is oxymethylene-linked poly(ethylene glycol) having a repeat sequence $((CH_2CH_2O)_aCH_2O)$ in which a has an average value of 4 to 9.

10. An ion-conducting polymeric material as claimed in claim 9 further characterised in that the oxymethylene-linked poly(ethylene glycol) has a molar mass of $1 \times 10^5$ to $6 \times 10^5$.

11. An ion-conducting polymeric material as claimed in any preceding claim further characterised in that the components are present in the range: structural polymer 1O-35 mole %; plasticiser 1O-5O mole % and ion-solvating polymer 30-70 mole %.

12. An electrolytic cell comprising an anode, a cathode and an electrolyte between the two characterised in that the electrolyte is a polymeric material as claimed in any preceding claim.

13. A battery characterised in that it comprises a plurality of cells as claimed in claim 12.

**Patentansprüche**

l. Ionenleitendes polymeres Material, das enthält:

einen Polyethylenoxid-Konstruktionswerkstoff hoher Molekülmasse, der bei Umgebungstemperatur mindestens teilweise kristallin ist, und

einen oder mehrere Weichmacher niedriger Masse, die ausgewählt werden unter Acetonitril, $\gamma$-Butyrolacton, Dioxolan, Tetrahydrofuran, 2-Methyltetrahydrofuran, Dimethylsulfoxid und Alkylencarbonaten,

dadurch gekennzeichnet, daß das ionenleitende Polymer daneben eines oder mehrere ionensolvatisierende Polymere enthält, die bei Umgebungstemperatur amorph sind, und daß das oder jedes ionensolvatisierende Polymer ausgewählt wird unter:

(i) Pfropfcopolymeren, die amorphe Seitenketten besitzen, welche die Einheit $(CH_2CH_2O)_k$ enthalten, worin k einen Mittelwert zwischen 3 und 20 besitzt und wobei die Hauptkette ausgewählt wird unter einer Kohlenstoff-Kohlenstoff-, einer Siloxan- oder einer Phosphazenkette, wobei eine verknüpfende Gruppe zwis-

6

chen der Seitenkette und der Hauptkette bestehen kann, die ausgewählt werden kann unter üblichen bekannten Gruppen, darunter Ester, Alkane, Oxyalkane und deren Kombinationen;

(ii) siloxanverknüpften Polyethylenglykolen mit einer sich wiederholenden Einheit $B((OCH_2CH_2)_a)_m$, worin B $-OSi-(CH_3)_2-$ ist, wobei a einen Mittelwert von 4 bis 9 besitzt und m gleich l ist, oder B $(-O)_{3/2}Si(CH_3)-$ ist, wobei a einen Mittelwert von 4 bis 9 besitzt und m gleich 3/2 ist, und

(iii) oxymethylenverknüpftem Polyethylenglykol mit einer sich wiederholenden Sequenz $((CH_2CH_2O)_aCH_2O)$, wobei a einen Mittelwert von 4 bis l0 besitzt.

2. Ionenleitendes polymeres Material nach Anspruch l, dadurch gekennzeichnet, daß es zusätzlich eines oder mehrere ionische Salze enthält.

3. Ionenleitendes polymeres Material nach Anspruch 2, dadurch gekennzeichnet, daß das oder jedes Salz ein Salz eines Metallions mit dem Anion einer starken Säure oder ein Salz eines stabilen kationischen Komplexions mit dem Anion einer starken Säure ist.

4. Ionenleitendes polymeres Material nach Anspruch 3, dadurch gekennzeichnet, daß es mindestens ein Lithiumsalz enthält.

5. Ionenleitendes polymeres Material nach Anspruch 4, dadurch gekennzeichnet, daß das/die Lithiumsalz(e) ausgewählt wird/werden unter $LiCF_3SO_3$, $LiPF_6$, $LiClO_4$ oder $LiAsF_6$.

6. Ionenleitendes polymeres Material nach einem der vorhergehenden Ansprüche, dadurch gekennzeichnet, daß der/die Weichmacher ionensolvatisierend ist/sind.

7. Ionenleitendes polymeres Material nach Anspruch 6, dadurch gekennzeichnet, daß der/die Weichmacher Propylencarbonat und/oder Ethylencarbonat ist/sind.

8. Ionenleitendes polymeres Material nach einem der vorhergehenden Ansprüche, dadurch gekennzeichnet, daß der Polyethylenoxid-Konstruktionswerkstoff eine Molekülmasse im Bereich von l x l0⁶ bis 5 x l0⁶ besitzt.

9. Ionenleitendes polymeres Material nach Anspruch 8, dadurch gekennzeichnet, daß das ionensolvatisierende Polymer oxymethylenverknüpftes Polyethylenglykol mit einer sich wiederholenden Sequenz $((CH_2CH_2O)_aCH_2O)$ ist, worin a einen Mittelwert von 4 bis 9 besitzt.

l0. Ionenleitendes polymeres Material nach Anspruch 9, dadurch gekennzeichnet, daß das oxymethylenverknüpfte Polyethylenglykol eine Molekülmasse von l x l0⁵ bis 6 x l0⁵ besitzt.

ll. Ionenleitendes polymeres Material nach einem der vorhergehenden Ansprüche, dadurch gekennzeichnet, daß die Komponenten in folgenden Anteilen vorliegen: Strukturpolymer l0 bis 35 Mol-%, Weichmacher l0 bis 50 Mol-% und ionensolvatisierendes Polymer 30 bis 70 Mol-%.

l2. Elektrolytische Zelle, die eine Anode, eine Kathode und einen Elektrolyten zwischen diesen enthält, dadurch gekennzeichnet, daß der Elektrolyt ein polymeres Material nach einem der vorhergehenden Ansprüche ist.

l3. Batterie, dadurch gekennzeichnet, daß sie eine Vielzahl von Zellen nach Anspruch l2 enthält.

**Revendications**

1. Matière polymère conductrice d'ions, comprenant :

une matière de structure en poly(oxyde d'éthylène) à masse moléculaire élevée, qui est au moins partiellement cristalline à la température ambiante, et

un ou plusieurs plastifiants à faible masse, choisis dans l'ensemble comprenant l'acétonitrile, la γ-butyrolactone, le dioxolane, le tétrahydrofuranne, le 2-méthytétrahydrofuranne, le diméthylsulfoxyde et des carbonates d'alkylènes;

matière caractérisée en ce que le polymère conducteur d'ions comprend en outre un ou plusieurs polymères à rôle de solvatation d'ions, qui sont amorphes à la température ambiante, et en ce que le ou chaque polymère à rôle de solvatation d'ions est choisi dans l'ensemble comprenant :

(i) des copolymères greffés comportant des chaînes latérales amorphes qui contiennent le motif $(CH_2CH_2O)_k$, dans lequel k a une valeur moyenne comprise entre 3 et 20 et la chaîne principale est choisie parmi une charpente carbone/carbone, une charpente de siloxane ou une charpente de phosphazène, avec possibilité de présence d'un groupe de liaison entre la chaîne latérale et la charpente, groupe qui peut être choisi parmi les groupes courants connus comprenant les groupes esters, alcanes, oxyalcanes et leurs combinaisons ;

(ii) des poly(éthylèneglycols) à chaînons siloxanes de liaison, comprenant un motif $B((OCH_2CH_2)_a)_m$, dans lequel B représente $-OSi-(CH_3)_2-$ et a a une valeur moyenne de 4 à 9, et m vaut 1, ou bien B représente $(-O)_{3/2} Si(CH_3)-$ et a a une valeur moyenne de 4 à 9 et m vaut 3/2, et

(iii) du poly(éthylèneglycol) à chaînons oxyméthylènes de liaison ayant une séquence répétée

$((CH_2CH_2O)_aCH_2O)$, dans laquelle a une valeur moyenne de 4 à 10.

2. Matière polymère conductrice d'ions, tellle que revendiquée à la revendication 1, caractérisée en outre en ce qu'elle comprend, de plus, un ou plusieurs sels ioniques.

3. Matière polymère conductrice d'ions telle que revendiquée à la revendication 2, caractérisée en outre en ce que le sel ou chaque sel est un sel d'ion métal avec un anion acide fort ou un sel d'un ion complexe cationique stable avec un anion acide fort.

4. Matière polymère conductrice d'ions, telle que revendiquée à la revendication 3, caractérisée en outre en ce qu'elle contient au moins un sel de lithium.

5. Matière polymère conductrice d'ions, telle que revendiquée à la revendication 4, caractérisée en outre en ce que le ou les sels de lithium sont choisis parmi $LiCF_3SO_3$, $LiPF_6$, $LiClO_4$ ou $LiAsF_6$.

6. Matière polymère conductrice d'ions, telle que revendiquée dans l'une quelconque des revendications précédentes, caractérisée encore en ce que le ou les plastifiants sont capables de solvater des ions.

7. Matière polymère conductrice d'ions, telle que revendiquée à la revendication 6, caractérisée en outre en ce que le ou les plastifiants sont du carbonate de propylène et/ou du carbonate d'éthylène.

8. Matière polymère conductrice d'ions, telle que revendiquée dans l'une quelconque des revendications précédentes, caractérisée encore en ce que la matière structurelle à base de poly(oxyde d'éthylène) a une masse molaire comprise entre $1 \times 10^6$ et $5 \times 10^6$.

9. Matière polymère conductrice d'ions, telle que revendiquée à la revendications 8, caractérisée en outre en ce que le polymère à rôle de solvatation d'ions est du poly(éthylèneglycol) à chaînons oxyméthyléniques de liaison, comportant une séquence répétée $((CH_2CH_2O)_aCH_2O)$, dans laquelle a a une valeur moyenne de 4 à 9.

10. Matière polymère conductrice d'ions, telle que revendiquée à la revendication 9, caractérisée en outre en ce que le poly(éthylèneglycol) à chaînons oxyméthyléniques de liaisons a une masse molaire de $1 \times 10^5$ à $6 \times 10^5$.

11. Matière polymère conductrice d'ions, telle que revendiquée dans l'une quelconque des revendications précédentes, caractérisée encore en ce que les composants sont présents dans la gamme : polymère structurel 10 à 35 moles % ; plastifiant 10 à 50 moles % et polymère à rôle de solvatation d'ions 30 à 70 moles %.

12. Elément de pile ou cellule électrolytique comprenant une anode, une cathode et un électrolyte entre les deux, éléments caractérisé en ce que l'électrolyte est une matière polymère telle que revendiquée dans l'une quelconque des revendications précédentes.

13. Batterie ou pile, caractérisée en ce qu'elle comprend plusieurs éléments tels que revendiqués à la revendication 12.

Fig.1.

Fig.6.

Fig.2.

Fig.3.

Fig.4.

Fig.5.